(19) Europäisches Patentamt
European Patent Office
Office européen des brevets

(11) **EP 1 353 174 B1**

(12) **FASCICULE DE BREVET EUROPEEN**

(45) Date de publication et mention
de la délivrance du brevet:
**08.12.2010 Bulletin 2010/49**

(51) Int Cl.:
**G01N 29/14** *(2006.01)*

(21) Numéro de dépôt: **03290912.9**

(22) Date de dépôt: **11.04.2003**

(54) **Procédé et dispositif de contrôle et de qualification d'un réservoir en matériau composite**

Verfahren und Vorrichtung zur Überwachung und zur Qualifizierung eines Behälters aus Verbundmaterial

Method and apparatus for controling and qualifying a tank made of composite material

(84) Etats contractants désignés:
**AT BE BG CH CY CZ DE DK EE ES FI FR GB GR HU IE IT LI LU MC NL PT RO SE SI SK TR**

(30) Priorité: **11.04.2002 FR 0204553**

(43) Date de publication de la demande:
**15.10.2003 Bulletin 2003/42**

(73) Titulaire: **GDF SUEZ**
**75008 Paris (FR)**

(72) Inventeurs:
• **Muller, Thomas**
**75011 Paris (FR)**
• **Valin, Laurence**
**95100 Argenteuil (FR)**
• **Bunsell, Anthony R.**
**77780 Bourron-Marlotte (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**AT-B- 399 780         DE-A- 19 808 636**
**US-A- 5 554 810       US-A- 5 969 252**

## Description

La présente invention a pour objet un procédé et un dispositif de contrôle et de qualification d'un réservoir en matériau composite destiné à contenir des fluides sous une pression maximale $P_{max}$, le matériau composite comprenant des fibres de carboné imprégnées de résine et agencées de manière à subir essentiellement des efforts de traction.

Il existe un besoin important de pouvoir contrôler et qualifier ou requalifier des réservoirs en matériaux composites destinés à contenir des fluides sous pression tels que des réservoirs de gaz naturel (GNV) servant de carburant pour des véhicules automobiles.

Diverses réglementations imposent en effet de procéder à des tests permettant de garantir qu'un réservoir de fluide sous pression sera capable de rester en exploitation pendant une durée résiduelle donnée, par exemple cinq ans, sans risquer de subir du fait de cette exploitation, un endommagement excessif susceptible d'affecter la sûreté de son utilisation.

On connaît déjà des techniques de qualification ou requalification de réservoirs de fluides sous pression consistant à faire subir au réservoir une épreuve hydraulique en surpression en soumettant le réservoir à une surpression de l'ordre de 1,5 fois la pression maximale d'utilisation. Une telle technique est toutefois relativement coûteuse et présente des risques d'endommagement du réservoir testé puisque la pression d'essai est supérieure à la pression maximale que devra subir le réservoir en fonctionnement normal. De plus, si cette technique permet d'éliminer des réservoirs défectueux ne résistant pas à l'épreuve en surpression, elle ne garantit pas qu'un réservoir ayant subi ce test avec succès ne subira pas un endommagement excessif dû à l'usure pendant une période d'exploitation future donnée, d'autant plus que l'épreuve en surpression aura contribué à fragiliser le réservoir. Une telle technique s'avère inadaptée à des réservoirs en matériaux composites.

De façon plus particulière on connaît par le document de brevet US 5,554,810 un procédé de détermination prédictive de la charge à rupture d'une structure, telle qu'un réservoir de stockage de gaz sous haute pression, selon lequel l'activité acoustique générée par les endommagements subis lors des essais à une pression d'essai est enregistrée et la valeur de prédiction de la charge à rupture est déterminée par le calcul.

Pour remédier à ces inconvénients, on a déjà proposé de procéder à des contrôles visuels des réservoirs afin de vérifier leur intégrité et pouvoir les qualifier pour une période donnée d'exploitation future. Une telle technique ne risque pas d'endommager le réservoir contrôlé, mais reste tributaire d'une appréciation relativement subjective de l'opérateur et surtout ne permet de prendre en compte que les défauts présents en surface. Une telle technique ne permet pas de tenir compte de l'endommagement normal en service du réservoir, dû à l'usure et ne permet donc pas de déterminer une durée de vie résiduelle.

La présente invention vise à remédier aux inconvénients précités et à permettre la mise en oeuvre d'un procédé de contrôle et de qualification ou requalification d'un réservoir en matériau composite, d'une façon fiable, peu coûteuse, simple et rapide à mettre en oeuvre.

Ces buts sont atteints grâce à un procédé de contrôle et de qualification d'un réservoir en matériau composite destiné à contenir des fluides sous une pression maximale $P_{max}$, le matériau composite comprenant des fibres de carbone imprégnées de résine et agencées de manière à subir essentiellement des efforts de traction, comprenant les étapes suivantes :

a) disposer au moins des premier et deuxième capteurs acoustiques sur le réservoir en matériau composite en des positions différentes,

b) soumettre le réservoir à un essai de fluage par une mise en pression interne de celui-ci

c) acquérir à l'aide des premier et deuxième capteurs acoustiques pendant une durée prédéterminée $T_0$ les émissions acoustiques correspondant au phénomène de libération d'énergie sous forme d'ondes élastiques transitoires au sein du matériau composite soumis à sollicitation, en éliminant par filtrage le bruit de fond inférieur à un niveau sonore prédéterminé $S_o$,

d) enregistrer l'ensemble des émissions acoustiques acquises à l'aide des premier et deuxième capteurs acoustiques,

e) soumettre les émissions acoustiques enregistrées à un filtrage passe-haut avec une valeur limite de filtrage supérieure audit niveau sonore prédéterminé $S_0$ de manière à conserver essentiellement les émissions acoustiques liées à la rupture des fibres au sein du matériau composite, **caractérisé en ce que** l'étape b) consistant à soumettre le réservoir à un essai de fluage par une mise en pression interne de celui-ci est effectuée à une pression d'essai $P_e$ égale à la pression maximale de fonctionnement $P_{max}$, en ce que le réservoir est maintenu à ladite pression d'essai $P_e$ pendant une durée prédéterminée $T_0$ comprise entre environ 4 et 24 heures et en ce qu'il comprend en outre les étapes suivantes,

f) comparer le nombre $N_F$ d'émissions acoustiques enregistrées et filtrées acquises pendant ladite durée déterminée $T_0$ avec un nombre limite $N_L$ d'émissions acoustiques déduit d'une courbe limite préétablie pour un réservoir virtuel critique du même type et ayant la même durée d'exploitation passée mais révélant un endommagement excessif affectant le bon fonctionnement à la fin d'une durée résiduelle prédéterminée $D_r$, et

g) qualifier ou non comme apte à un usage pour ladite période résiduelle prédéterminée $D_r$ le réservoir testé selon que le nombre $N_F$ d'émissions acoustiques enregistrées et filtrées acquises pendant ladite durée déterminée $T_0$ est inférieur ou non au nombre limite $N_L$ d'émissions acoustiques déduit de la courbe limite pré-établie.

Le filtrage du bruit de fond peut être effectué de manière à éliminer le bruit de fond inférieur ou égal à un niveau sonore d'environ 40 dB.

Les premier et deuxième capteurs peuvent être disposés sur une même génératrice d'un réservoir à tester de forme essentiellement cylindrique, ou peuvent être disposés de façon symétrique par rapport au centre du réservoir. Avantageusement, les capteurs acoustiques sont disposés en des positions différentes selon une direction axiale X'X du réservoir.

A titre d'exemple, les premier et deuxième capteurs acoustiques sont de type piézoélectrique avec une fréquence de résonance comprise entre 100 et 250 kHz.

Selon un aspect de l'invention, on choisit une durée prédéterminée $T_0$ d'autant plus longue que la durée d'exploitation passée $D_{exp}$ du réservoir à contrôler et qualifier est importante.

La durée résiduelle prédéterminée $D_r$ peut être comprise entre 2 et 6 ans, et par exemple égale à 5 ans.

Selon une caractéristique particulière, les signaux d'émission acoustique émis pendant une durée prédéterminée comprise entre 50 et 150 microsecondes, et de préférence égale à 100 microsecondes, sont analysés et comptabilisés comme définissant un événement unique d'émission acoustique.

Le procédé selon l'invention s'applique tout particulièrement à des réservoirs de gaz naturel, notamment des réservoirs de gaz naturel de véhicule (GNV) pour véhicules automobiles.

D'autres caractéristiques et avantages de l'invention ressortiront de la description suivante de modes particuliers de réalisation, donnés à titre d'exemples, en référence aux dessins annexés, sur lesquels :

- la figure 1 est une vue schématique d'un exemple d'agencement pour la mise en oeuvre du procédé de qualification ou requalification périodique d'un réservoir sous pression en matériau composite, conformément à l'invention,
- la figure 2 est un organigramme d'un exemple de procédé selon l'invention, et
- la figure 3 est un ensemble de courbes donnant, en fonction du temps de mesure, pour un exemple de type de réservoir, des nombres d'événements maximums enregistrés en tant qu'émissions acoustiques, au-delà desquels une qualification d'un réservoir ne peut plus être assurée pour diverses durées d'exploitation restantes comptées en années.

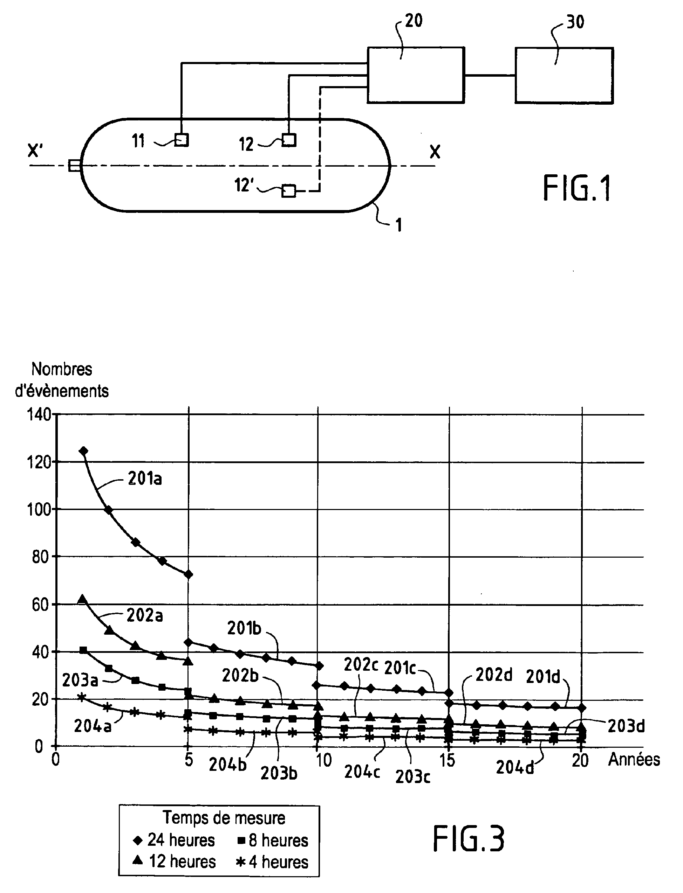

Si l'on se réfère à la figure 1, on voit un exemple de réservoir 1 de forme essentiellement cylindrique d'axe X'X, en matériau composite comprenant des fibres de carbone imprégnées de résine telle qu'une résine époxy et agencées de manière à subir essentiellement des efforts de traction.

Un tel réservoir est destiné à recevoir un fluide sous pression, tel que du gaz naturel, à une pression maximale $P_{max}$.

Dans le cas par exemple où un tel réservoir est utilisé sur une automobile pour contenir du gaz naturel comme carburant, ce réservoir 1 devra en général, pour des questions de sécurité ou pour répondre à des dispositions réglementaires, subir un contrôle permettant de s'assurer que le réservoir est toujours pérenne pour une utilisation pendant une période donnée d'exploitation restante, qui peut être par exemple comprise entre 2 et 6 ans.

Selon l'invention on procède à un contrôle et une qualification ou requalification du réservoir 1 sans que celui-ci doive être démonté, ni doive subir une épreuve à une pression supérieure à la pression maximale $P_{max}$.

Le procédé selon l'invention utilise le phénomène connu de l'émission acoustique qui est un phénomène de libération d'énergie sous forme d'ondes élastiques transitoires au sein d'un matériau soumis à sollicitation (voir par exemple la norme AFNOR NF A09-350).

Il a déjà été proposé d'utiliser la technique d'émission acoustique pour la recherche de défauts dans des matériaux métalliques ou encore des matériaux en matières plastique renforcée de fibres de verre sans que cette technique ait été appliquée à l'évaluation d'un endommagement naturel non localisé d'un réservoir permettant de déduire une durée de vie résiduelle.

Des études ont par ailleurs montré qu'il existe pour les matériaux composites une relation directe entre une émission acoustique cumulée, correspondant au nombre d'émissions de signaux acoustiques ou "événements" reflétant des ruptures de fibres par unité de temps et l'état d'endommagement de la structure testée, c'est-à-dire l'ensemble des fibres rompues qui ont lâché auparavant. De telles études ont été présentées en particulier dans les articles suivants:

"Suivi de l'endommagement des composites à fibres de carbones par émission acoustique", D. Valentin, A.R. Bunsell; 3èmes Journées Nationales sur les Composites, pp 131-140, Paris, 21-23 septembre 1982,

"Damage detection in Carbon Fibre Epoxy Structures Using Acoustic Emission"; D. Valentin, A.R. Bunsell; Composite Structures 2, pp 40-52, 1983,

"Towards a Life Prediction Technique for Carbon Fibre Filament Wound Structures subjected to steady pressure"; A.R. Bunsell, D. Valentin; Composite Structures, 1983.

Le procédé selon l'invention met en oeuvre la technique de l'émission acoustique dans un nouveau contexte d'application permettant d'obtenir de façon simple une qualification ou une requalification périodique d'un réservoir composite sous pression en carbone / résine dans lequel les fibres de carbone imprégnées de résine sont agencées de manière à subir essentiellement des efforts de traction. Selon ce procédé, il n'est pas nécessaire de soumettre le réservoir 1 à une pression interne supérieure à sa pression maximale d'utilisation qui correspond à sa pression de remplissage, ni de démonter le réservoir 1 pour lequel le contrôle et la qualification peuvent être effectués in situ.

L'installation de contrôle du réservoir 1 est représentée de façon schématique sur la figure 1.

Au moins un premier capteur acoustique 11 et un deuxième capteur acoustique 12 sont disposés sur le réservoir 1 en matériau composite en des positions différentes selon une direction axiale X'X du réservoir 1. Les capteurs 11, 12 peuvent être disposés sur une même génératrice du réservoir 1 dont la forme est essentiellement cylindrique. Toutefois, les capteurs 11 et 12 peuvent également être disposés symétriquement par rapport au centre du réservoir 1. On a ainsi représenté sur la figure 1 à titre de variante un capteur 12' symétrique du capteur 11 par rapport au centre du réservoir 1. Un gel silicone est interposé entre les capteurs 11, 12 ou 11, 12' et la paroi du réservoir 1.

Les capteurs acoustiques 11, 12 peuvent être de type piézoélectrique avec une fréquence de résonance de l'ordre de 100 à 250kHz. Des valeurs typiques de fréquences de résonance sont 150 kHz ou 200 kHz.

Les signaux issus des capteurs acoustiques 11, 12 sont appliqués à une chaîne de traitement et de filtrage 20 qui peut comprendre un ou plusieurs étages d'amplification et un ou plusieurs filtres pour ne retenir que les signaux dont l'amplitude est supérieure à une valeur de seuil prédéterminée $S_0$ correspondant à un niveau sonore supérieur ou égal à 40 dB.

Un bloc de commande 30 relié à la chaîne de traitement et de filtrage 20 constitue un système d'acquisition, d'enregistrement et de calcul qui permet d'enregistrer et de traiter le nombre d'événements acoustiques détectés par les capteurs 11, 12 pendant une période de temps prédéterminée $T_0$ qui peut être par exemple de 4, 8, 12 ou 24 heures, au cours de laquelle le réservoir 1 a été mis à sa pression maximale de fonctionnement normal.

Le bloc de commande 30 comprend une interface utilisateur qui permet de fournir notamment des données d'entrée telles que le type de réservoir, le niveau de qualification ou requalification souhaité comprenant une durée résiduelle prédéterminée $D_r$ de fonctionnement souhaitée et tenant compte d'une durée d'exploitation passé $D_{exp}$, ainsi que des paramètres de commande tels que le démarrage ou la durée de l'essai; et des données de sortie, telles que l'information selon laquelle le réservoir est accepté ou refusé.

Le bloc de commande 30 inclut un logiciel d'acquisition et d'interprétation des données pendant l'essai, qui prend en compte un modèle théorique pré-établi.

Selon ce modèle, le réservoir est assimilé à un composite unidirectionnel et on considère qu'il n'y a aucune concentration de contraintes dans le réservoir et que l'enroulement filamentaire est réalisé de telle sorte que les fibres subissent seulement des efforts de traction.

Ce modèle considère par ailleurs que lors du chargement du matériau composite lors de la mise en pression, il y a rupture de fibres sous la forme d'un réseau de défauts aléatoirement répartis. Ces ruptures correspondent à des sites d'endommagement du matériau. Localement, il y a évolution des contraintes : la contrainte appliquée aux fibres voisines augmente localement du fait de la répartition des contraintes de la fibre cassée. L'augmentation de la taille des sites d'endommagement, puis leur coalescence coïncident avec la cinétique d'endommagement et définissent la durée de vie du matériau composite constituant le réservoir.

Ainsi, le modèle mis en oeuvre par le bloc de commande est basé sur le fait que l'émission acoustique détectée puis analysée traduit un phénomène irréversible directement relié à l'endommagement du matériau. Pour rendre le traitement efficace, le modèle considère que la rupture des fibres constitue le mécanisme principal d'endommagement du matériau. D'autres types d'endommagement existent, qui donnent une signature acoustique propre distincte de la signature acoustique correspondant à la rupture des fibres : en particulier, la fissuration de la matrice, le frottement matrice-matrice, la rupture d'interface, et les frottements fibre-matrice et fibre-fibre donnent des signatures acoustiques dont les domaines sont inférieurs à celui de la signature acoustique correspondant à la rupture des fibres. Au titre d'exemple, pour un certain type de réservoir, la signature acoustique correspondant à la rupture des fibres peut être située dans le domaine 80-100 dB.

Dans la mesure où la rupture du matériau composite est contrôlée par la rupture des fibres (signaux de forte amplitude et de courte durée), on filtre les émissions acoustiques enregistrées de façon à ne retenir que les événements correspondant à la rupture des fibres. Toutefois, comme indiqué précédemment, lors de l'acquisition des signaux de mesure à travers les circuits 20, on adopte une valeur de seuil de filtrage plus basse, de l'ordre de 40 dB, qui permet d'éliminer les bruits parasites tout en prenant en compte les différents mécanismes d'endommagement possibles lors de l'enregistrement initial des événements.

Selon un aspect important de l'invention, le bloc de commande 30 procède à une comparaison de l'activité acoustique enregistrée à une activité critique prédéfinie correspondant à un réservoir non conforme limite.

Lors d'un essai de contrôle, dont la durée $T_0$ est de quelques heures, le réservoir est soumis à un essai de fluage à la pression maximale $P_{max}$ autorisée et le nombre d'événements acoustiques enregistrés est placé sur un graphe reliant le temps avec le nombre d'événements.

Ce résultat est comparé à une courbe limite spécifique au type de réservoir qui a été préalablement enregistrée dans une mémoire du bloc de commande 30, et constitue une courbe maîtresse d'un réservoir virtuel critique. Cette courbe critique a été établie pour un type de réservoir donné et indique que pour ce type de réservoir, tout point situé au-dessus de la courbe implique la dégradation irréversible, par éclatement, du réservoir avant l'échéance de temps indiquée correspondant à un prochain contrôle.

Les courbes maîtresses tiennent compte de l'âge du réservoir en exploitation et de la durée $T_0$ de l'essai.

En pratique, un réservoir produit d'autant moins d'émissions acoustiques qu'il a eu une durée d'exploitation plus longue. La durée $T_0$ de l'essai de qualification doit donc être d'autant plus longue que le réservoir considéré a eu une durée d'exploitation importante de manière à produire un nombre d'événements (émissions acoustiques) significatif.

La figure 3 montre un exemple de courbes maîtresses de référence donnant, pour un type de réservoir donné, et pour différentes durées de mesure $T_0$, le nombre d'événements correspondant à la rupture d'un réservoir au bout d'une durée d'exploitation donnée, mesurée en années. Les courbes maîtresses sont établies pour des durées résiduelles d'exploitation déterminées (par exemple des périodes de cinq ans) et tiennent compte de la durée d'exploitation passée du réservoir.

D'après la théorie, sous charge constante, le matériau continue d'émettre suivant la loi :

$$\frac{dN}{dt} = \frac{A}{(t + \tau)^n} \qquad (1)$$

où t est le temps, tau est une constante de temps, N est le nombre d'émission, A est un paramètre ne dépendant que de la charge appliquée, n est un coefficient d'ajustement compris entre 0 et 1 et qui est d'autant plus proche de 1 que le matériau est proche d'un matériau unidirectionnel. Un exemple indicatif pour obtenir les courbes maîtresses situées figure 3 consiste à:

- Considérer que n est proche de 1 (matériau unidirectionnel) dans un premier temps,
- Réaliser sur un type de réservoir donné, un essai de montée en pression jusqu'à l'éclatement (ou presqu'éclatement) et un essai de fluage pour déterminer A, tau, N* (nombre d'événements acoustiques maximum avant éclatement)

Déterminer n (proche de 1) pour que l'activité acoustique maximum soit atteinte à 5 ans, puis pour 10 ans puis pour 15 ans etc...On obtient n5 (pour 5 ans), n10 (pour 10 ans), n15 (pour 15 ans), etc...,...

- Puis construction des courbes maîtresses de qualification sur la base de l'équation (1)

N étant ici le nombre d'événements comptés lors de la qualification, t5 étant une variable de temps comprise entre 0 et 5 ans si l'essai porte sur la période de 0 à 5 ans, t10 entre 5 et 10 ans si l'essai porte sur la période de 5 à 10 ans etc... et T étant la durée de l'épreuve de qualification (4h, 8h, 12h ou encore 24 heures).

La courbe 201a de la figure 3 peut ainsi être construite par l'équation :

$$N = \frac{A}{(t5 + \tau)^{n5}} * \overline{T}$$

Sur la figure 3, on a représenté à titre d'exemple pour le même type de réservoir, des courbes maîtresses 201a à 201d correspondant à des durées de mesure $T_0$ de 24 heures.

La première courbe maîtresse 201a montre le nombre d'événements à partir duquel un réservoir ne peut plus être qualifié pour une première période de 5 ans. La courbe maîtresse 201b montre le nombre d'événements à partir duquel le même type de réservoir ayant déjà 5 ans d'exploitation ne peut plus être qualifié pour une période totale de 10 ans, c'est à dire pour une période supplémentaire de 5 ans.

Les courbes maîtresses 201c et 201d montrent de la même manière le nombre d'événements à partir duquel le même type de réservoir ne peut plus être qualifié pour une période totale de 15 ans ou 20 ans respectivement.

Les courbes maîtresses 202a à 202d, 203a à 203d et 204a 204d sont semblables aux courbes 201a à 201d mais s'appliquent à des durées de mesure $T_0$ respectivement de 12 heures, de 8 heures et de 4 heures.

L'analyse des données est donc basée sur la comparaison du nombre d'événements obtenu au cours de l'essai avec les différentes courbes maîtresses à 5, 10, 15 ou 20 ans suivant le niveau de requalification que doit subir le réservoir. La courbe maîtresse à 5 ans fait office d'essai de timbrage et qualifie le réservoir pour les 5 premières années d'exploitation. Après chaque période de 5 années d'exploitation, les courbes maîtresses à 10, 15 et 20 ans le qualifient pour 5 années supplémentaires, respectivement jusqu'à 10, 15 et 20 ans.

Le nombre $N_F$ d'événements (émissions acoustiques) détectés pendant la durée $T_0$ d'un essai de réservoir 1 et retenus après filtrage sélectif, c'est à dire supérieurs à un seuil S de discrimination des événements liés à la rupture de fibres, lequel seuil S est lui même supérieur au seuil $S_0$ de filtrage du bruit de fond, est ainsi comparé avec le nombre d'événements limite $N_L$ fourni par la courbe maîtresse correspondante. Si le nombre d'événements $N_F$ est inférieur au nombre $N_L$, le réservoir 1 est considéré comme conforme pour une durée d'exploitation de 5 années supplémentaires. Si en revanche NF ≥ NL, le réservoir 1 ne peut être qualifié sans un examen complémentaire.

Avec l'exemple de la figure 3, si par exemple $N_F$ = 30 et si la durée de mesure $T_0$ est de 24 heures, on voit que pour un réservoir n'ayant jamais été exploité, la valeur de $N_F$ est en-dessous des valeurs de la courbe 201a ce qui permet de qualifier le réservoir pour une période de 5 ans. La même valeur $N_F$ de 30 événements obtenue avec un essai de 24 heures permettrait de la même façon de requalifier pour 5 années supplémentaires un réservoir ayant déjà été exploité pendant 5 ans (cf. courbe maîtresse 201b). En revanche, une telle valeur ne permettrait pas de requalifier un réservoir pour des périodes allant au-delà de 10 ans (cf. courbes maîtresses 201c et 201d).

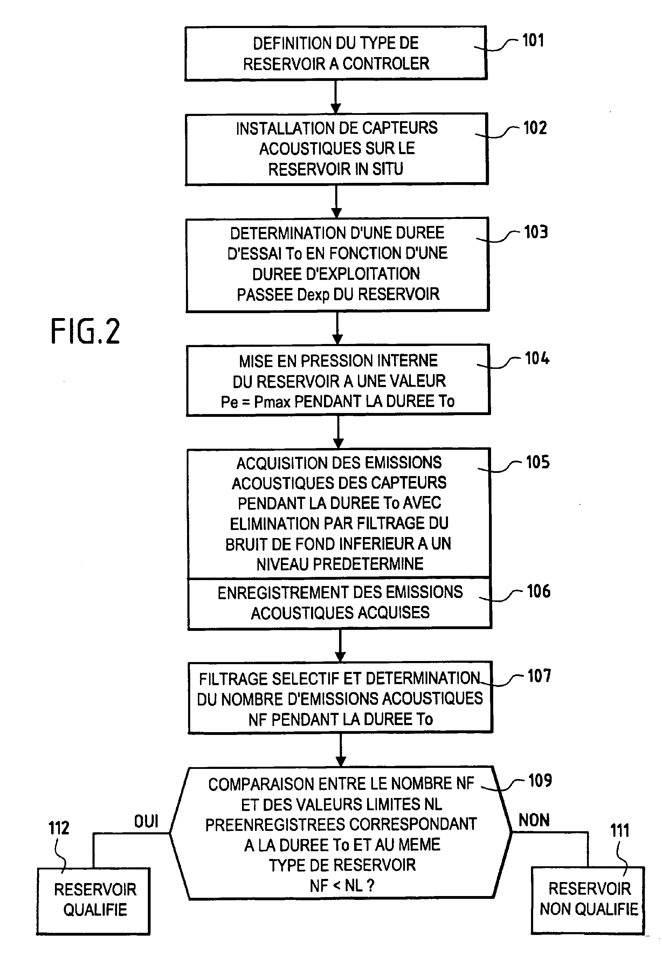

Les principales étapes du procédé selon l'invention sont résumées dans l'organigramme de la figure 2.

Dans une étape initiale 101, on détermine le type de réservoir à contrôler.

Dans une étape 102, on installe les capteurs acoustiques 11 et 12 sur le réservoir à contrôler.

Dans une étape 103, on détermine une durée $T_0$ d'essai en fonction d'une durée $D_{exp}$ d'exploitation passée du réservoir à contrôler.

Dans une étape 104, on soumet pendant la durée $T_0$ le réservoir à une pression d'essai $P_e$ égale à la pression maximale d'utilisation du réservoir.

Dans une étape 105, on procède à l'acquisition des émissions acoustiques délivrées par les capteurs 11, 12 pendant la durée d'essai $T_0$, avec élimination par filtrage du bruit de fond inférieur à un niveau sonore prédéterminé $S_0$.

Dans une étape 106, on enregistre l'ensemble des émissions acoustiques acquises.

Dans une étape 107, on procède à un filtrage passe-haut sélectif avec un seuil de filtrage S supérieur au niveau sonore prédéterminé $S_0$ de manière à conserver essentiellement les émissions acoustiques liées à la rupture des fibres au sein du matériau composite, et à un comptage du nombre $N_F$ des émissions acoustiques enregistrées et filtrées.

Dans une étape 108, on sélectionne en mémoire des valeurs limites $N_L$ d'émissions acoustiques correspondant au type de réservoir, à la durée d'essai $T_0$ et à la durée de qualification souhaitée.

Dans une étape 109, on procède à la comparaison du nombre $N_F$ mesuré et des valeurs limites $N_L$ sélectionnées.

Dans une étape 111, on produit en sortie une réponse de non-qualification du réservoir si le résultat du test de l'étape 109 révèle que $NF \geq NL$.

Dans une étape 112, on produit en sortie une réponse de qualification du réservoir si le résultat du test de l'étape 109 révèle que $NF < NL$.

Lors de l'étape 105 d'acquisition des émissions acoustiques on peut procéder à un filtrage à 40 dB tandis que l'on procède à l'étape 107 à un filtrage plus sélectif pour éliminer les émissions acoustiques révélant un endommagement mais n'étant pas directement liées à la rupture des fibres.

De préférence, on choisit une durée d'essai $T_0$ d'autant plus longue que la durée d'exploitation passée $D_{exp}$ du réservoir à contrôler et qualifier est importante.

Lors du traitement des signaux délivrés par les capteurs 11 et 12, les signaux d'émission acoustique émis pendant une durée prédéterminée comprise entre 50 et 150 microsecondes, et de préférence égale à 100 microsecondes sont analysés et comptabilisés comme définissant un événement unique d'émission acoustique.

A titre d'exemple, comme cela ressort notamment de la norme internationale ISO 11439 du 15 septembre 2000 intitulée « Bouteilles de gaz - bouteilles haute pression pour le stockage de gaz naturel utilisé comme carburant à bord de véhicules automobiles », la pression de service peut être de l'ordre de 200 bar pour une température uniforme de 15°C, de sorte qu'une pression d'épreuve minimale utilisée avec un procédé de l'art antérieur qui correspond à 1,5 fois la pression de service, serait de l'ordre de 300 bar.

Selon cette norme ISO 11439, pour les bouteilles tout composite de type CNG-4, la pression de rupture réelle minimale ne doit pas être inférieure à 470 bar pour des fibres de carbone.

Conformément à l'invention, il n'est ainsi pas nécessaire, pour qualifier ou requalifier un réservoir, de le soumettre à une pression d'essai $P_e$ qui correspondrait à une pression d'épreuve (par exemple 300 Bar) égale à 1,5 fois la pression de service ou pression maximale d'utilisation, et il est suffisant que la pression d'essai $P_e$ soit égale à la pression maximale de fonctionnement $P_{max}$, ou pression de service (par exemple 200 bar). Par rapport à une pression de rupture $P_r$ (par exemple 470 bar),lors de l'application d'une pression d'essai $P_e$ selon l'invention (par exemple 200 bar), on reste dans tous les cas en dehors du régime critique et du régime pré-critique qui précèdent la rupture dès lors que l'on n'a pas besoin d'appliquer une pression telle que la pression d'épreuve (par exemple 300 bar).

On notera que même si lors d'un essai la valeur adoptée pour la pression maximale $P_{max}$ est supérieure à la pression de service en régime stabilisé et correspond à la pression maximale atteinte lors du remplissage (par exemple 260 bar) avant de redescendre à la valeur de la pression de service (par exemple 200 bar), on se situe dans tous les cas en-deçà de la pression d'épreuve ou pression de timbrage (par exemple 300 bar) et en-deçà du régime pré-critique.

## Revendications

1. Procédé de contrôle et de qualification d'un réservoir (1) en matériau composite destiné à contenir des fluides sous une pression maximale $P_{max}$, le matériau composite comprenant des fibres de carbone imprégnées de résine et agencées de manière à subir essentiellement des efforts de traction, comprenant les étapes suivantes :

a) disposer au moins des premier et deuxième capteurs acoustiques (11, 12) sur le réservoir (1) en matériau composite en des positions différentes,

b) soumettre le réservoir (1) à un essai de fluage par une mise en pression interne de celui-ci,

c) acquérir à l'aide des premier et deuxième capteurs acoustiques (11, 12) pendant une durée prédéterminée $T_0$ les émissions acoustiques correspondant au phénomène de libération d'énergie sous forme d'ondes élastiques transitoires au sein du matériau composite soumis à sollicitation, en éliminant par filtrage le bruit de fond inférieur à un niveau sonore prédéterminé $(S_0)$,

d) enregistrer l'ensemble des émissions acoustiques acquises à l'aide des premier et deuxième capteurs acoustiques (11, 12),

e) soumettre les émissions acoustiques enregistrées à un filtrage passe-haut avec une valeur limite de filtrage supérieure audit niveau sonore prédéterminé $S_0$ de manière à conserver essentiellement les émissions acoustiques liées à la rupture des fibres au sein du matériau composite, **caractérisé en ce que** l'étape b) consistant à soumettre le réservoir (1) à un essai de fluage par une mise en pression interne de celui-ci est effectuée à une pression d'essai $P_e$ égale à la pression maximale de fonctionnement $P_{max}$, **en ce que** le réservoir (1) est maintenu à ladite pression d'essai $P_e$ pendant une durée prédéterminée $T_0$ comprise entre environ 4 et 24 heures, et **en ce qu'**il comprend en outre les étapes suivantes,

f) comparer le nombre $N_F$ d'émissions acoustiques enregistrées et filtrées acquises pendant ladite durée déterminée $T_0$ avec un nombre limite $N_L$ d'émissions acoustiques déduit d'une courbe limite pré-établie pour un réservoir virtuel critique du même type et ayant la même durée d'exploitation passée mais révélant un endommagement excessif affectant le bon fonctionnement à la fin d'une durée résiduelle prédéterminée $D_r$, et

g) qualifier ou non comme apte à un usage pour ladite période résiduelle prédéterminée $D_r$ le réservoir (1) testé selon que le nombre $N_F$ d'émissions acoustiques enregistrées et filtrées acquises pendant ladite durée déterminée $T_0$ est inférieur ou non au nombre limite $N_L$ d'émissions acoustiques déduit de la courbe limite pré-établie.

**2.** Procédé selon la revendication 1, **caractérisé en ce que** lors de l'étape d'acquisition on effectue un filtrage du bruit de fond de manière à éliminer le bruit de fond inférieur ou égal à un niveau sonore d'environ 40 dB.

**3.** Procédé selon la revendication 1 ou la revendication 2, **caractérisé en ce que** les premier et deuxième capteurs (11, 12) sont disposés en des positions différentes selon une direction axiale X'X du réservoir (1).

**4.** Procédé selon l'une quelconque des revendications 1 et 3, **caractérisé en ce que** les premier et deuxième capteurs (11, 12) sont disposés sur une même génératrice d'un réservoir à tester de forme essentiellement cylindrique.

**5.** Procédé selon l'une quelconque des revendications 1 à 3, **caractérisé en ce que** les premier et deuxième capteurs (11, 12) sont disposés de façon symétrique par rapport au centre du réservoir (1).

**6.** Procédé selon l'une quelconque des revendications 1 à 5, **caractérisé en ce que** les premier et deuxième capteurs acoustiques (11, 12) sont de type piézoélectrique avec une fréquence de résonance comprise entre 100 et 250 kHz.

**7.** Procédé selon l'une quelconque des revendications 1 à 6, **caractérisé en ce que** l'on interpose un gel silicone entre les premier et deuxième capteurs (11, 12) et le réservoir (1) à contrôler et qualifier.

**8.** Procédé selon l'une quelconque des revendications 1 à 7, **caractérisé en ce que** l'on choisit une durée prédéterminée $T_0$ d'autant plus longue que la durée d'exploitation passée $D_{exp}$ du réservoir à contrôler et qualifier est importante.

**9.** Procédé selon l'une quelconque des revendications 1 à 8, **caractérisé en ce que** ladite durée résiduelle prédéterminée $D_r$ est comprise entre 2 et 6 ans.

**10.** Procédé selon l'une quelconque des revendications 1 à 9, **caractérisé en ce que** les signaux d'émission acoustique émis pendant une durée prédéterminée comprise entre 50 et 150 microsecondes, et de préférence égale à 100 microsecondes, sont analysés et comptabilisés comme définissant un événement unique d'émission acoustique.

**11.** Procédé selon l'une quelconque des revendications 1 à 10, **caractérisé en ce qu'**il est appliqué à un réservoir de gaz naturel, notamment un réservoir de gaz naturel de véhicule (GNV) pour véhicule automobile.

**Claims**

**1.** A method for inspecting and qualifying a tank (1) made of composite material for containing fluids under a maximum pressure $P_{max}$, the composite ma-

terial comprising carbon fibers that are impregnated with resin and arranged in such a manner as to be subjected essentially to traction forces, the method comprising the following steps:

a) placing at least first and second acoustic sensors (11, 12) at different positions on the tank (1) of composite material;

b) subjecting the tank (1) to a creep test by subjecting it to internal pressure;

c) using the first and second acoustic sensors (11, 12) during a predetermined duration $T_0$ to acquire the acoustic emissions corresponding to the phenomenon of energy being released in the form of transient elastic waves within the composite material subjected to stress, while filtering out background noise below a predetermined sound level $(S_0)$;

d) recording all of the acoustic emissions acquired by the first and second acoustic sensors (11, 12); and

e) subjecting the recorded acoustic emissions to highpass filtering with a filter cutoff value greater than said predetermined sound level $S_0$ so as to conserve essentially the acoustic emissions that are associated with fibers rupturing within the composite material;

the method being **characterized in that** step b) consisting in subjecting the tank (1) to a creep test by subjecting it to internal pressure is performed at a test pressure $P_e$ equal to the maximum operating pressure $P_{max}$, **in that** the tank (1) is maintained at said test pressure $P_e$ for a predetermined duration $T_0$ lying in the range about 4 hours to about 24 hours, and **in that** it further comprises the following steps:

f) comparing the number $N_F$ of recorded and filtered acoustic emissions acquired during said determined duration $T_0$ with a limit number $N_L$ of acoustic emissions deduced from a pre-established limit curve for a critical virtual tank of the same type and having the same past operating duration, but exhibiting excessive damage affecting proper operation at the end of a predetermined residual duration $D_r$; and

g) characterizing the tested tank (1) as being suitable or not suitable for use over said predetermined residual duration $D_r$ depending on whether the number $N_F$ of recorded and filtered acoustic emissions acquired during said determined duration $T_0$ is less than or greater than the limit number $N_L$ of acoustic emissions deduced from the pre-established limit curve.

2. A method according to claim 1, **characterized in that** during the acquisition step, background noise is filtered in such a manner as to eliminate background noise less than or equal to a sound level of about 40 dB.

3. A method according to claim 1 or claim 2, **characterized in that** the first and second sensors (11, 12) are placed in different positions along an axial direction X'X of the tank (1).

4. A method according to claim 1 or claim 3, **characterized in that** the first and second sensors (11, 12) are disposed on a common generator line of the tank for testing, which tank is essentially cylindrical in shape.

5. A method according to any one of claims 1 to 3, **characterized in that** the first and second sensors (11, 12) are disposed symmetrically relative to the center of the tank (1).

6. A method according to any one of claims 1 to 5, **characterized in that** the first and second acoustic sensors (11, 12) are of the piezoelectric type with a resonant frequency lying in the range 100 kHz to 250 kHz.

7. A method according to any one of claims 1 to 6, **characterized in that** a silicone gel is placed between the first and second sensors (11, 12) and the tank (1) for inspecting and qualifying.

8. A method according to any one of claims 1 to 7, **characterized in that** a predetermined duration $T_0$ is selected of duration that increases with increasing duration of the past operation $D_{exp}$ of the tank for inspecting and qualifying.

9. A method according to any one of claims 1 to 8, **characterized in that** said predetermined residual duration $D_r$ lies in the range 2 years to 6 years.

10. A method according to any one of claims 1 to 9, **characterized in that** acoustic emission signals emitted during a predetermined duration lying in the range 50 microseconds to 150 microseconds, and preferably equal to 100 microseconds, are analyzed and counted as defining a single acoustic emission event.

11. A method according to any one of claims 1 to 10, **characterized in that** it is applied to a natural gas tank, in particular a vehicle natural gas (VNG) tank for a motor vehicle.

**Patentansprüche**

1. Verfahren zur Kontrolle und Qualifizierung eines Behälters (1) aus Verbundwerkstoff, der dazu bestimmt ist, unter einem Maximaldruck $P_{max}$ stehende Fluide zu enthalten, wobei der Verbundwerkstoff Kohlenstoffasern umfaßt, die mit Harz imprägniert und derart ausgerichtet sind, daß sie im wesentlichen Zugkräfte erfahren, umfassend die folgenden Schritte:

a) wenigstens einen ersten und einen zweiten akustischen Sensor (11, 12) an dem Verbundwerkstoffbehälter (1) in unterschiedlichen Positionen anordnen,

b) den Behälter (1) **dadurch** einem Zeitstandversuch unterziehen, daß er unter Innendruck gesetzt wird,

c) mit Hilfe des ersten und des zweiten akustischen Sensors (11, 12) während einer vorbestimmten Zeitdauer $T_0$ die Schallemissionen, die dem Phänomen der Energiefreisetzung in Form transienter elastischer Wellen innerhalb des der Belastung ausgesetzten Verbundwerkstoffs entsprechen, unter Ausfiltern des Hintergrundrauschens unterhalb eines vorbestimmten Schallpegels ($S_0$) erfassen,

d) alle mit Hilfe des ersten und des zweiten akustischen Sensors (11, 12) erfaßten Schallemissionen aufzeichnen,

e) die aufgezeichneten Schallemissionen einer Hochpaßfilterung mit einem Filtergrenzwert oberhalb des vorbestimmten Schallpegels $S_0$ unterziehen, um im wesentlichen die mit dem Bruch der Fasern innerhalb des Verbundwerkstoffs verbundenen Schallemissionen zu erhalten, **dadurch gekennzeichnet, daß** Schritt b), der darin besteht, den Behälter (1) **dadurch** einem Zeitstandversuch zu unterziehen, daß er unter Innendruck gesetzt wird, unter einem Versuchsdruck $P_e$ durchgeführt wird, der gleich dem maximalen Betriebsdruck $P_{max}$ ist, daß der Behälter (1) über eine vorbestimmte Zeitdauer $T_0$ zwischen etwa 4 und 24 Stunden unter dem Versuchsdruck $P_e$ gehalten wird, und daß es ferner die folgenden Schritte umfaßt,

f) die Anzahl $N_F$ der aufgezeichneten und gefilterten, während der vorbestimmten Zeitdauer $T_0$ erfaßten Schallemissionen mit einer Grenzzahl $N_L$ von Schallemissionen vergleichen, die von einer Grenzkurve abgeleitet ist, welche zuvor für einen virtuellen kritischen Behälter des gleichen Typs erstellt wird, der die gleiche abgelaufene Betriebsdauer hat, jedoch eine übermäßige Beschädigung erkennen läßt, die das einwandfreie Funktionieren am Ende einer vorbestimmten Restdauer $D_r$ beeinträchtigt, und

g) den getesteten Behälter (1) als für einen Gebrauch für die vorbestimmte Restdauer $D_r$ geeignet oder ungeeignet qualifizieren, je nachdem, ob die Anzahl $N_F$ der aufgezeichneten und gefilterten, während der vorbestimmten Zeitdauer $T_0$ erfaßten Schallemissionen niedriger

ist als die von der zuvor erstellten Grenzkurve abgeleitete Grenzzahl $N_L$ von Schallemissionen oder nicht.

2. Verfahren nach Anspruch 1, **dadurch gekennzeichnet, daß** während des Erfassungsschrittes ein Filtern des Hintergrundrauschens durchgeführt wird, um das Hintergrundrauschen kleiner oder gleich einem Schallpegel von etwa 40 dB zu entfernen.

3. Verfahren nach Anspruch 1 oder Anspruch 2, **dadurch gekennzeichnet, daß** der erste und der zweite Sensor (11, 12) in unterschiedlichen Positionen entlang einer axialen Richtung X'X des Behälters (1) angeordnet sind.

4. Verfahren nach einem der Ansprüche 1 und 3, **dadurch gekennzeichnet, daß** der erste und der zweite Sensor (11, 12) an einer gleichen Mantellinie eines zu testenden, im wesentlichen zylinderförmigen Behälters angeordnet sind.

5. Verfahren nach einem der Ansprüche 1 bis 3, **dadurch gekennzeichnet, daß** der erste und der zweite Sensor (11, 12) zum Mittelpunkt des Behälters (1) symmetrisch angeordnet sind.

6. Verfahren nach einem der Ansprüche 1 bis 5, **dadurch gekennzeichnet, daß** der erste und der zweite akustische Sensor (11, 12) piezoelektrischen Typs mit einer Resonanzfrequenz im Bereich zwischen 100 und 250 kHz sind.

7. Verfahren nach einem der Ansprüche 1 bis 6, **dadurch gekennzeichnet, daß** zwischen den ersten und zweiten Sensoren (11, 12) und dem zu kontrollierenden und zu qualifizierenden Behälter (1) ein Silikongel eingebracht ist.

8. Verfahren nach einem der Ansprüche 1 bis 7, **dadurch gekennzeichnet, daß** eine vorbestimmte Zeitdauer $T_0$ gewählt wird, die um so länger ist, je länger die abgelaufene Betriebsdauer $D_{exp}$ des zu kontrollierenden und zu qualifizierenden Behälters ist.

9. Verfahren nach einem der Ansprüche 1 bis 8, **dadurch gekennzeichnet, daß** die vorbestimmte Restdauer $D_r$ zwischen 2 und 6 Jahre beträgt.

10. Verfahren nach einem der Ansprüche 1 bis 9, **dadurch gekennzeichnet, daß** die Schallemissionssignale, die während einer vorbestimmten Zeitdauer zwischen 50 und 150 Mikrosekunden, und vorzugsweise von gleich 100 Mikrosekunden, ausgesandt werden, als ein einziges Schallemissionsereignis definierend analysiert und erfaßt werden.

**11.** Verfahren nach einem der Ansprüche 1 bis 10, **dadurch gekennzeichnet, daß** es auf einen Erdgasbehälter, insbesondere auf einen Fahrzeugerdgasbehälter (NGV) für Kraftfahrzeuge angewandt wird.

FIG.1

FIG.3

**FIG.2**

```
┌─────────────────────────────┐
│   DEFINITION DU TYPE DE      │ ─── 101
│   RESERVOIR A CONTROLER      │
└─────────────────────────────┘
              │
              ▼
┌─────────────────────────────┐
│  INSTALLATION DE CAPTEURS    │ ─── 102
│   ACOUSTIQUES SUR LE         │
│   RESERVOIR IN SITU          │
└─────────────────────────────┘
              │
              ▼
┌─────────────────────────────┐
│  DETERMINATION D'UNE DUREE   │ ─── 103
│  D'ESSAI To EN FONCTION D'UNE│
│  DUREE D'EXPLOITATION        │
│  PASSEE Dexp DU RESERVOIR    │
└─────────────────────────────┘
              │
              ▼
┌─────────────────────────────┐
│   MISE EN PRESSION INTERNE   │ ─── 104
│   DU RESERVOIR A UNE VALEUR  │
│  Pe = Pmax PENDANT LA DUREE To│
└─────────────────────────────┘
              │
              ▼
┌─────────────────────────────┐
│   ACQUISITION DES EMISSIONS  │ ─── 105
│  ACOUSTIQUES DES CAPTEURS    │
│  PENDANT LA DUREE To AVEC    │
│  ELIMINATION PAR FILTRAGE DU │
│  BRUIT DE FOND INFERIEUR A UN│
│   NIVEAU PREDETERMINE        │
├─────────────────────────────┤
│  ENREGISTREMENT DES EMISSIONS│ ─── 106
│   ACOUSTIQUES ACQUISES       │
└─────────────────────────────┘
              │
              ▼
┌─────────────────────────────┐
│ FILTRAGE SELECTIF ET DETERMINATION│ ─── 107
│ DU NOMBRE D'EMISSIONS ACOUSTIQUES │
│   NF PENDANT LA DUREE To     │
└─────────────────────────────┘
              │
              ▼
```

COMPARAISON ENTRE LE NOMBRE NF ─── 109
ET DES VALEURS LIMITES NL
PREENREGISTREES CORRESPONDANT
A LA DUREE To ET AU MEME
TYPE DE RESERVOIR
$NF < NL$ ?

OUI → 112 RESERVOIR QUALIFIE

NON → 111 RESERVOIR NON QUALIFIE

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5554810 A

**Littérature non-brevet citée dans la description**

- **D. Valentin ; A.R. Bunsell.** Suivi de l'endommagement des composites à fibres de carbones par émission acoustique. *3èmes Journées Nationales sur les Composites,* 1982, 131-140
- **D. Valentin ; A.R. Bunsell.** Damage detection in Carbon Fibre Epoxy Structures Using Acoustic Emission. *Composite Structures,* 1983, vol. 2, 40-52
- **A.R. Bunsell ; D. Valentin.** Towards a Life Prediction Technique for Carbon Fibre Filament Wound Structures subjected to steady pressure. *Composite Structures,* 1983